# EUROPÄISCHE PATENTSCHRIFT

(11) **EP 3 357 102 B1**
(45) Veröffentlichungstag und Bekanntmachung des Hinweises auf die Patenterteilung: **14.07.2021**
(21) Anmeldenummer: 16770703.3
(22) Anmeldetag: 12.09.2016
(51) Int. Cl.: H01L 51/56, B05C 1/08, B32B 37/14

(54) **VERFAHREN ZUM HERSTELLEN EINES SCHICHTVERBUNDS**
METHOD FOR PRODUCING A LAYER COMPOSITE
PROCÉDÉ DE FABRICATION D'UN COMPOSÉ MULTICOUCHE

(30) Priorität: 28.09.2015 DE 102015218562
(43) Veröffentlichungstag der Anmeldung: 08.08.2018
(73) Patentinhaber: ThyssenKrupp Steel Europe AG, 47166 Duisburg (DE); thyssenkrupp AG, 45143 Essen (DE)
(72) Erfinder: GLASS, Roman, 44135 Dortmund (DE); LEWE, Tobias, 48147 Münster (DE)
(74) Vertreter: Zenz Patentanwälte Partnerschaft mbB
(86) Internationale Anmeldenummer: PCT/EP2016/071446
(87) Internationale Veröffentlichungsnummer: WO 2017/055068

(56) Entgegenhaltungen:
- DE-A1-102015 103 141
- JP-A- 2010 073 340
- US-A1- 2007 090 387

## Beschreibung

Die Erfindung betrifft ein Verfahren zum Herstellen eines Schichtverbunds mit eingebetteter funktionaler Struktur.

Schichtverbunde, die ein Metallsubstrat mit an dem Metallsubstrat angeordneter funktionaler Struktur aufweisen, gewinnen zunehmend an Bedeutung. Ein wesentlicher Vorteil eines derartigen Verbunds ist die generell gute Verfügbarkeit von Metallsubstraten. Ein weiterer Vorteil ist, dass zur Herstellung und Bearbeitung von Metallsubstraten sowie Metallsubstrate aufweisenden Schichtverbunde eine Vielzahl bekannter Verfahren etabliert ist, auf die in unmodifizierter oder nur geringfügig modifizierter Weise zurückgegriffen werden kann.

Wesentliche Voraussetzung für einen erfolgreichen Einsatz von auf Metallsubstraten angeordneten funktionalen Strukturen ist die Gewährleistung der Langzeitstabilität. Hierfür ist zum einen ein Schutz des Metallsubstrat, beispielsweise vor Korrosion, erforderlich. Weiterhin ist ein Schutz der funktionalen Struktur erforderlich, der vorteilhafter Weise durch Einbettung der funktionalen Struktur in geeignete Schutzummantelungen herbeigeführt wird.

Ein Beispiel für einen Schichtverbund, der eine eingebettete funktionale Struktur auf einem Metallsubstrat aufweist, ist der EP 2 605 280 A1 zu entnehmen. Jener Anmeldung ist ein metallisches Bauelement mit einer Solarzelle zu entnehmen, wobei die Solarzelle mit einer Anzahl von Schichten eingefasst ist, beispielsweise von einer elektrisch isolierenden Schicht und einer elektrisch leitfähigen Schicht. Einer Gewährleistung des Schutzes sowohl des Metallsubstrats als auch der funktionalen Struktur dient eine Abdeckschicht. Die dargestellte Lösung weist jedoch den Nachteil auf, dass aufgrund einer entlang der Quererstreckung des metallischen Bauelements vorhandenen Dickenunterschiede der von dem elektrisch leitfähigen Schichten eingefassten funktionalen Schicht die Anbringung der Abdeckschicht einen mit der vorhandenen Geometrie einhergehenden Aufwand erfordert. US 2007/090387 und JP 2010 073340 offenbaren Verfahren zum Herstellen eingebetteter LED- oder OLED-Strukturen.

Der Erfindung liegt daher die Aufgabe zu Grunde, einen Schichtverbund mit eingebetteter funktionaler Struktur der eingangs erläuterten Art zur Verfügung zu stellen, der die erläuterten Vorteile mit einer gegenüber dem gewürdigten Stand der Technik weniger aufwendig zu gewährleistenden Herstellung, kombiniert.

Die Aufgabe wird mit einem Verfahren zum Herstellen eines Schichtverbunds mit den Merkmalen des Anspruchs 1 gelöst. Weitere vorteilhafte Ausgestaltungen und Weiterbildungen gehen aus der nachfolgenden Beschreibung hervor. Ein oder mehrere Merkmale aus den Ansprüchen, der Beschreibung wie auch den Figuren können mit einem oder mehreren anderen Merkmalen daraus zu weiteren Ausgestaltungen der Erfindung verknüpft werden. Es können auch ein oder mehrere Merkmale aus dem unabhängigen Anspruch durch ein oder mehrere andere Merkmale verknüpft werden. Der vorgeschlagene Gegenstand ist nur als Entwurf zur Formulierung der Erfindung aufzufassen, ohne diesen aber zu beschränken.

Es wird ein Verfahren zum Herstellen eines Schichtverbunds mit eingebetteter funktionaler Struktur vorgeschlagen. Der Schichtverbund wird aus mehreren Schichten hergestellt. Die Schichten werden vertikaler Richtung übereinander angeordnet. Das Herstellen des Schichtverbunds umfasst die folgenden Schritte:
- Bereitstellen eines Metallsubstrats,
- optional zumindest abschnittsweises Anordnen einer Zwischenschicht auf dem Metallsubstrat,
- Anordnen einer Einbettungsschicht, wobei die Einbettungsschicht in vertikaler Richtung eine Ausnehmung bereitstellt, wobei die Ausnehmung sich entlang eines Einbettungsabschnitts einer Metallsubstratquererstreckung erstreckt,
- Anordnen von einer oder mehreren funktionalen Strukturen jeweils in einem von der Ausnehmung umfassten Bereich.

Die Einbettungsschicht wird mittels einer Auftragsvorrichtung aufgetragen. Die Auftragsvorrichtung trägt die Einbettungsschicht entlang wenigstens eines Ummantelungsabschnitts der Metallsubstratquererstreckung auf, wodurch eine Kante des Ummantelungsabschnitts die Ausnehmung begrenzt.

Die vertikale Richtung ist hierbei eine Flächennormale einer Metallsubstratfläche.

Der Begriff des Metallsubstrats umfasst beliebige Metalle und metallische Werkstoffe. Ebenso umfasst der Begriff des Metallsubstrats auch Stahlsubstrate. Insbesondere sollen auch Stahlflachsubstrate umfasst sein, wie beispielsweise aus Kohlenstoffstahl, nicht rostendem Stahl oder Edelstahl hergestellte Stahlbänder oder Stahlbleche, daraus hergestellte Platinen, Zuschnitte oder ähnliches. Auch Flachstahl soll umfasst sein.

Bevorzugt erfolgt das zumindest abschnittsweise Anordnen einer Zwischenschicht in vertikaler Richtung auf dem Metallsubstrat und das Anordnen der Einbettungsschicht auf der Zwischenschicht.

Bevorzugt erfolgt das Anordnen der funktionalen Struktur nach dem Anordnen der Einbettungsschicht. Es kann aber ebenso vorgesehen sein, dass das Anordnen der Einbettungsschicht nach dem Anordnen der funktionalen Struktur vorsieht.

Die erfindungsgemäße Vorgehensweise hat den Vorteil zur Folge, dass ein Anordnen der auf dem Metallsubstrat vorgesehenen Schichten unter Nutzung von Standardverfahren. Es kann somit in besonders effizienter Weise eine Einbettung der funktionalen Struktur oder der funktionalen Strukturen in dem Schichtverbund herbeigeführt werden, was nicht zuletzt unter dem Gesichtspunkt der Kosteneffizienz wie der Prozessstabilität zu Vorteilen führt.

Das Anordnen der funktionalen Struktur in einer Ausnehmung hat bei geeigneter Wahl einer Dicke der Einbettungsschicht den Vorteil zur Folge, dass entlang einer Metallsubstratquererstreckung eine Vergleichsmäßigung der Gesamtschichtdicke erreicht wird. Um diesen Effekt vollständig auszunutzen, kann in einer bevorzugten Ausgestaltung beispielsweise vorgesehen sein, dass an einer oder mehreren Schnittkanten des Schichtverbunds die funktionale Struktur sich entlang des vollständigen Einbettungsabschnitts erstreckt.

In einer bevorzugten Ausbildung des Verfahrens erfolgt das Anordnen der Zwischenschicht mittels Auftragen der Zwischenschicht mit einer entlang der Metallsubstratquererstreckung konstanten Dicke.

Für den Fall, dass die funktionale Struktur und/oder die Einbettungsschicht nicht selbstständig haftend ausgebildet ist, kann die Zwischenschicht eine oder mehrere Kleberlagen aufweisen. Weiterhin kann die Zwischenschicht eine Primerlage aufweisen, die auf dem Metallsubstrat und das Metallsubstrat berührend angeordnet ist, um beispielsweise eine gute Haftung der nachfolgenden Lage der Zwischenschicht oder eine gute Haftung der Einbettungsschicht und/oder der Funktionsschicht zu gewährleisten. Alternativ oder auch zusätzlich kann bei geeigneter Wahl des Primers durch diesen auch ein Korrosionsschutz des Metallsubstrats erreicht werden.

Eine weitere Ausbildung des Verfahrens kann beispielsweise auch vorsehen, dass das Auftragen der Zwischenschicht mit einer Standardapplikationsrolle erfolgt, wobei die Standardapplikationsrolle entlang einer Auftragserstreckung einen konstanten Radius aufweist.

Eine Verwendung einer Standardapplikationsrolle weist den besonderen Vorteil auf, dass das erläuterte Verfahren ohne oder mit nur vergleichsweise geringem apparativem Aufwand erfolgen kann, da übliche oder optimalerweise bereits vorhandene Anlagen unter keinem oder nur geringer Anpassung genutzt werden können.

Vorteilhafterweise können Ausgestaltungen des Verfahrens vorgesehen sein, in denen die Einbettungsschicht eine Korrosionsschutzlage aufweist. Das Vorsehen einer Korrosionsschutzlage als Bestandteil der Einbettungsschicht kann gegebenenfalls sogar gezielt für den Vorteil genutzt werden, dass ein Korrosionsschutz einer Primerlage und eine Korrosionsschutzlage einer Einbettungsschicht einander ergänzend wirken, wodurch ein optimierter Korrosionsschutz des Metallsubstrats und/oder der funktionalen Struktur gewährleistet wird.

Erfindungsgemäß ist vorgesehen, dass das Anordnen der Einbettungsschicht mittels Auftragen der Einbettungsschicht auf dem Metallsubstrat unter Verwendung einer als Ummantelungsapplikationsrolle ausgebildeten Auftragsvorrichtung erfolgt. Die Ummantelungsapplikationsrolle weist in dem Ummantelungsabschnitt einen größeren Radius in ihrer axialen Erstreckung auf als in dem Einbettungsabschnitt ihrer axialen Erstreckung zur mit dem Auftragen erfolgenden Herbeiführung einer Ausnehmung.

In einer beispielhaften Ausgestaltung des Verfahrens kann beispielsweise vorgesehen sein, dass die funktionale Struktur eine Funktionslage aufweist und das Anordnen der Funktionslage in der Ausnehmung mittels Auftragen auf dem Metallsubstrat unter Verwendung einer Ausnehmungsapplikationsrolle erfolgt. Die Ausnehmungsapplikationsrolle weist in dem Einbettungsabschnitt ihrer axialen Erstreckung einen größeren Radius auf als in dem Ummantelungsabschnitt ihrer axialen Erstreckung. Durch diese erläuterte Ausgestaltung der Applikationsrolle wird bezweckt, dass ein Anordnen der funktionalen Struktur in der Ausnehmung erfolgen kann, ohne dass in anderen Bereichen der Metallbandquererstreckung eine Beeinträchtigung der Oberfläche des Schichtaufbaus erfolgt.

In einer bevorzugten Variante des Verfahrens erfolgt vor dem Anordnen der funktionalen Struktur ein Auftragen einer ersten Kleberschicht in der Ausnehmung. Das Auftragen der ersten Kleberschicht erfolgt unter Verwendung einer Ausnehmungsapplikationsrolle erfolgt. Die Ausnehmungsapplikationsrolle weist in dem Einbettungsabschnitt ihrer axialen Erstreckung einen größeren Radius auf als in dem Ummantelungsabschnitt ihrer axialen Erstreckung, um das Anordnen der funktionalen Struktur in der Ausnehmung zu gewährleisten.

Weiterhin kann eine Ausgestaltung des Verfahrens vorsehen, dass nach dem Anordnen der funktionalen Struktur ein Auftragen einer Barriereschicht mit einer Standardapplikationsrolle erfolgt. Die Standardapplikationsrolle weist einen konstanten Radius entlang ihrer Erstreckung aufweist. Ein Auftragen der Barriereschicht nach dem Anordnen der funktionalen Struktur und die Nutzung einer Standardapplikationsrolle für das Auftragen der Barriereschicht führt insbesondere zur Ausbildung einer glatten und ebenen Oberfläche. Weiterhin wird ein Schutz der funktionalen Struktur vor äußeren Einflüssen, beispielsweise Korrosion begünstigende Feuchtigkeit, bewerkstelligt. Weiterhin kann mittels der Barriereschicht eine erste Barriere eines Diffusionspfades in der vertikalen Richtung, insbesondere zwischen Einbettungsschicht und funktionaler Struktur, bereitgestellt werden.

Nach dem Auftragen der Barriereschicht kann in vorteilhafter Weiterbildung des Verfahrens ein Auftragen einer zweiten Kleberschicht in dem Ummantelungsabschnitt vorgesehen sein. Das Auftragen der zweiten Kleberschicht kann unter Verwendung einer als Ummantelungsapplikationsrolle ausgebildeten Auftragsvorrichtung erfolgen. Die Ummantelungsapplikationsrolle weist in dem Ummantelungsabschnitt ihrer axialen Erstreckung einen größeren Radius auf als in dem Einbettungsabschnitt ihrer axialen Erstreckung. Ziel dieser Nutzung einer Ummantelungsapplikationsrolle ist ein Auftragen eines Klebers zur Befestigung einer Barrierefolie zum Schutz der Funktionsfolie außerhalb einer lateralen Erstreckung der Funktionsfolie, indem ein Auftragen unter Herbeiführung einer Ausnehmung erfolgt. Vorteil einer derart vorgesehenen Aufbringung eines Klebers außerhalb der lateralen Erstreckung der Funktionsfolie ist eine Reduzierung oder gar Vermeidung einer Beeinträchtigung der Funktionalität der funktionalen Struktur, beispielsweise durch Korrosion. Die Barrierefolie dient hierbei einem weiteren Schutz insbesondere der funktionalen Struktur, vor Degradation, beispielsweise aufgrund korrosiven Angriffs. Auch eine Degradation weiterer Schichten des Schichtverbunds, beispielsweise des Metallsubstrats, wird als Folge des Abschlusses gegebenenfalls vorhandener Diffusionspfade vermindert oder sogar vollständig vermieden.

Um die Funktionalität der Funktionsfolie möglichst beeinträchtigungsfrei zu gewährleisten, kann weiterhin vorgesehen sein, dass die Barriereschicht transparent ist. Es kann beispielsweise vorgesehen sein, dass die Barriereschicht einen Transmissionskoeffizienten für senkrecht einfallendes Licht einer Wellenlänge von 600 nm aufweist, der größer als 0,8, bevorzugt größer als 0,9, besonders bevorzugt größer als 0,95 ist.

Weiterhin kann vorgesehen sein, dass nach Auftragen der Barriereschicht ein Rollprofilieren des Schichtverbundes vorgenommen wird. Die für das Rollprofilieren verfügbare apparative Ausstattung kann somit in vorteilhafter Weise genutzt werden, um profilierte Schichtverbunde mit der Funktionalität der funktionalen Strukturen herzustellen. Hierdurch wird beispielsweise ermöglicht, dass die erläuterten Verfahrensschritte zur Herstellung von profilierten Blechen genutzt werden, die beispielsweise in Automobilkarosserien Verwendung finden.

So kann beispielsweise vorgesehen sein, dass das Metallsubstrat Stahlsubstrat ist, insbesondere ein Stahlband oder ein Flachstahl. Im Ergebnis steht somit ein Verfahren zur Verfügung, das potentiell zur Herstellung von bekannten aus Stahlband oder Flachstahl hergestellten Gegenständen geeignet ist unter Erweiterung dieser Gegenstände um eine entsprechend gewünschte und geeignete funktionale Struktur.

Insbesondere kann die funktionale Struktur als dass die funktionale Struktur als einen Kunststoff aufweisende Folie ausgebildet sein. Weiterhin kann beispielsweise vorgesehen sein, dass die funktionale Struktur ein Photovoltaikelement aufweist, beispielsweise eine organische Photovoltaik-Funktionsfolie. Weitere Elemente, welche als Bestandteile der funktionalen Struktur einzeln oder in Kombination miteinander vorgesehen sein können, sind eine LED; eine OLED; ein Dünnschichtdisplay, einen flächiger Sensor und/oder eine Dünnschichtbatterie.

In einer speziellen Ausgestaltung kann vorgesehen sein, dass die funktionale Struktur als Folie ausgebildet ist, die wenigstens eine Funktions-Schutzlage ausweist. Vorzugsweise ist die Funktions-Schutzlage insoweit transparent ausgebildet, dass die Funktions-Schutzfolie einen Transmissionskoeffizienten für senkrecht einfallendes Licht einer Wellenlänge von 600 nm aufweist, der größer als 0,8, bevorzugt größer als 0,9, besonders bevorzugt größer als 0,95 aufweist.

Weiterhin kann in einer vorteilhaften Ausbildung vorgesehen sein, dass die Funktions-Schutzfolie eine Wasserdurchlässigkeit aufweist, die kleiner als 1/10³ g/m²/Tag ist.

Besonders bevorzugt ist eine Auswahl der zweiten Kleberschicht dahingehend, dass die zweite Kleberschicht eine Wasserdurchlässigkeit aufweist, die kleiner als 1/10³ g/m²/Tag ist. Hierdurch wird durch Überlagerung der Barrierefunktion gegen ein Diffundieren von Wasser erreicht, die zu einer Wasserdurchlässigkeit führt, die kleiner als 1/10⁶ g/m²/Tag ist, womit der Vorteil erreicht wird, auch anspruchsvolle funktionale Strukturen in langlebiger Weise als Bestandteil des Schichtverbunds zur Verfügung zu stellen.

Ein weiterer unabhängiger Gedanke der Erfindung betrifft einen Schichtverbund mit eingebetteter funktionaler Struktur, der nach einem der erläuterten Verfahren hergestellt wurde.

Im Folgenden werden konkrete Ausgestaltungen der Erfindung mit Bezugnahme auf die Figuren im Detail näher erläutert. Die Figuren und begleitende Beschreibung der resultierenden Merkmale sind nicht beschränkend auf die jeweiligen Ausgestaltungen zu lesen, dienen jedoch der Illustration beispielhafter Ausgestaltung. Weiterhin können die jeweiligen Merkmale untereinander wie auch mit Merkmalen der obigen Beschreibung genutzt werden für mögliche weitere Entwicklungen und Verbesserungen der Erfindung, speziell bei zusätzlichen Ausgestaltungen, welche nicht dargestellt sind.

### Es zeigen

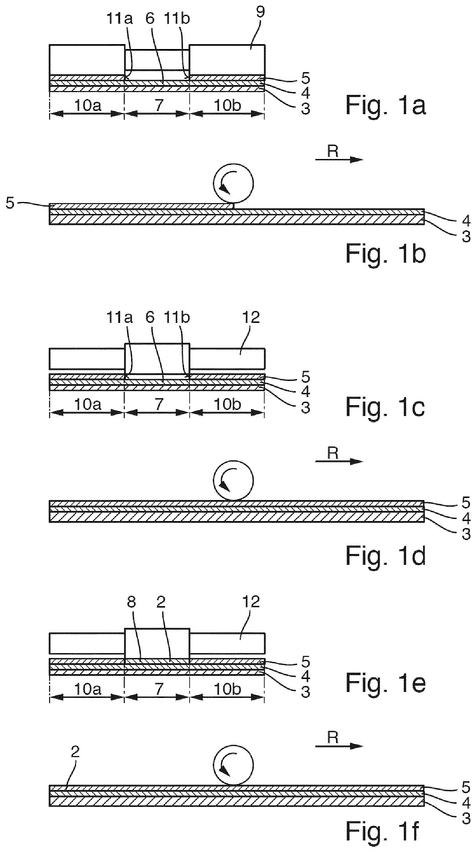

Fig. 1a bis 1f und anschließend 2a bis 2f eine beispielhafte Ausgestaltung eines erfindungsgemäßen Verfahrens.

Fig. 1a ist ein bereitgestelltes, als Stahlband 3 ausgebildetes, Metallsubstrat 3 zu entnehmen. Das Metallsubstrat 3 ist in dem dargestellten Verfahrensschritt bereits mit einer als Primer ausgebildeten Zwischenschicht 4 versehen. Mittels einer Ummantelungsapplikationsrolle 9 erfolgt ein Auftragen einer Einbettungsschicht 5, wobei die Bandlaufrichtung des Stahlbands mit dem Pfeil R dargestellt ist. Fig. 1b ist das Anordnen der Einbettungsschicht 5 in schematischer Seitenansicht zu entnehmen, während Fig. 1c das Anordnen der Einbettungsschicht in schematischer frontaler Darstellung zu entnehmen ist. Wie Fig. 1c zu entnehmen ist, stellt die Einbettungsschicht 5 eine Ausnehmung 6 bereit, die sich entlang eines Einbettungsabschnitts 7 einer Metallsubstratquererstreckung erstreckt. Das Auftragen der Einbettungsschicht 5 erfolgt mittels einer als Ummantelungsapplikationsrolle 9 ausgebildeten Auftragsvorrichtung, die in einem Ummantelungsabschnitt 10a, 10b ihrer axialen Erstreckung einen größeren Radius aufweist als in ihrem Einbettungsabschnitt 7. In der Folge wird eine Ausnehmung 6 bereitgestellt, welche durch eine erste Kante 11a und eine zweite Kante 11b begrenzt ist.

In einem nachfolgenden Verfahrensschritt wird der Bereich der Ausnehmung mittels einer Ausnehmungsapplikationsrolle 12 mit einem Flüssigkleber beschichtet. Nach Aufbringen des Flüssigklebers in dem Bereich der Ausnehmung wird in der Ausnehmung 6 eine als Funktionsfolie ausgebildete funktionale Struktur 8 mittels kaschiert, wofür ebenfalls eine Ausnehmungsapplikationsrolle genutzt wird. Der Schritt des Aufbringen des Flüssigklebers ist den Figs. 1c und 1d, der Schritt des Kaschierens der Funktionsfolie 8 den Figs. 1e und 1f zu entnehmen.

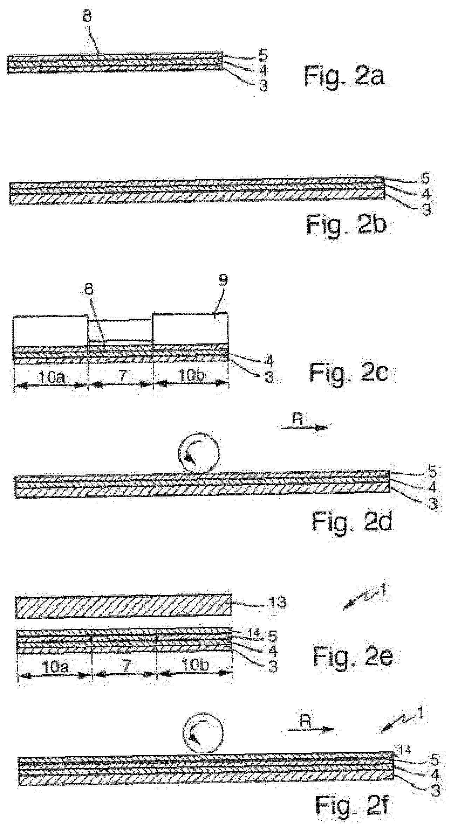

Das nach dem Verfahrensschritt der Figs. 1e und 1f vorliegende Zwischenprodukt ist den Figs. 2a und 2b zu entnehmen.

Als folgender Verfahrensschritt wird weiterhin mittels einer Ummantelungsapplikationsrolle 9 ein Kleber für eine Anbringung einer Befestigungsfolie aufgetragen, wie Figs. 2c und 2d zu entnehmen ist. Als abschließender Verfahrensschritt erfolgt ein Kaschieren einer Barriereschicht 14, wofür eine Standardapplikationsrolle 13 verwendet wird.

## Patentansprüche

1. Verfahren zum Herstellen eines Schichtverbunds (1) mit eingebetteter funktionaler Struktur (8), bei dem ein Schichtverbund (1) aus mehreren Schichten hergestellt wird, die in vertikaler Richtung übereinander angeordnet werden, wobei das Herstellen des Schichtaufbaus die folgenden Schritte umfasst:
- Bereitstellen eines Metallsubstrats (3),
- Anordnen einer Einbettungsschicht (5), wobei die Einbettungsschicht (5) in vertikaler Richtung eine Ausnehmung (6) bereitstellt, wobei die Ausnehmung (6) sich entlang eines Einbettungsabschnitts (7) einer Metallsubstratquererstreckung erstreckt,
- Anordnen von einer funktionalen Struktur (8) oder mehreren funktionalen Strukturen (8) jeweils in einem von der Ausnehmung (6) umfassten Bereich, wobei die Einbettungsschicht (5) mittels einer Auftragsvorrichtung (9) aufgetragen wird, welche die Einbettungsschicht (5) entlang wenigstens eines Ummantelungsabschnitts (10a, 10b) der Metallsubstratquererstreckung aufträgt, wodurch wenigstens eine Kante (11a, 11b) des Ummantelungsabschnitts (10a, 10b) die Ausnehmung (6) begrenzt, **dadurch gekennzeichnet, dass** das Anordnen der Einbettungsschicht mittels Auftragen auf dem Metallsubstrat (3) unter Verwendung einer als Ummantelungsapplikationsrolle (9) ausgebildeten Auftragsvorrichtung erfolgt, wobei die Ummantelungsapplikationsrolle (9) in dem Ummantelungsabschnitt (10a, 10b) ihrer axialen Erstreckung einen größeren Radius aufweist als in dem Einbettungsabschnitt (7) ihrer axialen Erstreckung zur mit dem Auftragen erfolgenden Herbeiführung einer Ausnehmung.

2. Verfahren nach Anspruch 1, **dadurch gekennzeichnet, dass** zumindest abschnittsweise eine Zwischenschicht (4) auf dem Metallsubstrat (3) angeordnet wird.

3. Verfahren nach Anspruch 2, **dadurch gekennzeichnet, dass** das Anordnen der Zwischenschicht (4) mittels Auftragen der Zwischenschicht (4) mit einer entlang der Metallsubstratquererstreckung konstanten Dicke erfolgt.

4. Verfahren nach Anspruch 2 oder nach Anspruch 3, **dadurch gekennzeichnet, dass** das Auftragen der Zwischenschicht (4) mit einer Standardapplikationsrolle (13) erfolgt, wobei die Standardapplikationsrolle (13) entlang einer Auftragserstreckung einen konstanten Radius aufweist.

5. Verfahren nach einem der vorhergehenden Ansprüche, **dadurch gekennzeichnet, dass** die Zwischenschicht (4) eine Primerlage aufweist und/oder dass die Einbettungsschicht (5) eine Korrosionsschutzlage aufweist.

6. Verfahren nach einem der vorhergehenden Ansprüche, **dadurch gekennzeichnet, dass** die funktionale Struktur (8) eine Funktionslage aufweist und das Anordnen der Funktionslage in der Ausnehmung (6) mittels Auftragen auf dem Metallsubstrat (3) unter Verwendung einer Ausnehmungsapplikationsrolle (12) erfolgt, wobei die Ausnehmungsapplikationsrolle (12) in dem Einbettungsabschnitt (7) ihrer axialen Erstreckung einen größeren Radius aufweist als in dem Ummantelungsabschnitt (10a, 10b) ihrer axialen Erstreckung zum Anordnen der funktionalen Struktur (8) in der Ausnehmung.

7. Verfahren nach Anspruch 6, **dadurch gekennzeichnet, dass** vor Anordnen der funktionalen Struktur (8) ein Auftragen einer ersten Kleberschicht in der Ausnehmung (6) erfolgt, wobei das Auftragen der ersten Kleberschicht unter Verwendung einer Ausnehmungsapplikationsrolle (12) erfolgt, wobei die Ausnehmungsapplikationsrolle (12) in dem Einbettungsabschnitt (7) ihrer axialen Erstreckung einen größeren Radius aufweist als in dem Ummantelungsabschnitt (10a, 10b) ihrer axialen Erstreckung zum Anordnen der funktionalen Struktur (8) in der Ausnehmung.

8. Verfahren nach einem der vorhergehenden Ansprüche, **dadurch gekennzeichnet, dass** nach dem Anordnen der funktionalen Struktur ein Auftragen einer Barriereschicht mit einer Standardapplikationsrolle (13) erfolgt, wobei die Standardapplikationsrolle (13) einen konstanten Radius entlang ihrer Erstreckung aufweist.

9. Verfahren nach Anspruch 8, **dadurch gekennzeichnet, dass** vor dem Auftragen der Barriereschicht ein Auftragen einer zweiten Kleberschicht in dem Ummantelungsabschnitt (10a, 10b) erfolgt, wobei das Auftragen der zweiten Kleberschicht unter Verwendung einer als Ummantelungsapplikationsrolle (9) ausgebildeten Auftragsvorrichtung erfolgt, wobei die Ummantelungsapplikationsrolle (9) in dem Ummantelungsabschnitt (10a, 10b) ihrer axialen Erstreckung einen größeren Radius aufweist als in dem Einbettungsabschnitt (7) ihrer axialen Erstreckung zur mit dem Auftragen erfolgenden Herbeiführung einer Ausnehmung.

10. Verfahren nach Anspruch 8 oder nach Anspruch 9, **dadurch gekennzeichnet, dass** die Barriereschicht transparent ist, insbesondere einen Transmissionskoeffizienten für senkrecht einfallendes Licht einer Wellenlänge von 600 nm aufweist, der größer als 0,8, bevorzugt größer als 0,9, besonders bevorzugt größer als 0,95 ist.

11. Verfahren nach einem der Ansprüche 8 bis 10, **dadurch gekennzeichnet, dass** nach Auftragen der Barriereschicht (14) ein Rollprofilieren des Schichtverbundes (1) vorgenommen wird.

12. Verfahren nach einem der vorhergehenden Ansprüche, **dadurch gekennzeichnet, dass** das Metallsubstrat (3) ein Stahlsubstrat ist, insbesondere ein Stahlband oder ein Flachstahl.

13. Verfahren nach einem der vorhergehenden Ansprüche, **dadurch gekennzeichnet, dass** die funktionale Struktur (8) als einen Kunststoff aufweisende Folie ausgebildet ist und/oder ein Photovoltaikelement, insbesondere eine organische Photovoltaik-Funktionsfolie; eine LED; eine OLED; ein Dünnschichtdisplay; einen flächiger Sensor und/oder eine Dünnschichtbatterie aufweist.

## Claims

1. A method for producing a layer composite (1) with an embedded functional structure (8), in which a layer composite (1) is made of a plurality of layers arranged in a vertical direction on top of each other, wherein the production of the layer structure comprises the following steps:
- providing of a metal substrate (3),
- arranging an embedding layer (5), wherein the embedding layer (5) provides a recess (6) in the vertical direction, wherein the recess (6) extends along an embedding portion (7) of a metal-substrate transverse extension,
- arranging a functional structure (8) or a plurality of functional structures (8) each within a region encompassed by the recess (6), wherein the embedding layer (5) is applied by means of an application device (9) that applies the embedding layer (5) along at least one coating portion (10a, 10b) of the metal-substrate transverse extension, whereby at least one edge (11a, 11b) of the coating portion (10a, 10b) limits the recess (6), **characterized in that** the arrangement of the embedding layer on the metal substrate (3) is carried out by means of applying it using an application device designed as coating application roller (9), wherein the coating application roller (9) has a greater radius in the coating portion (10a, 10b) of its axial extension than in the embedding layer (7) of its axial extension for causing the creation of a recess upon application.

2. The method according to Claim 1, **characterized in that** at least one intermediate layer (4) is arranged on a metal substrate (3) in sections.

3. The method according to Claim 2, **characterized in that** the arrangement of the intermediate layer (4) is carried out by applying the intermediate layer (4) with a constant thickness along the transverse metal-substrate extension.

4. The method according to Claim 2 or according to Claim 3, **characterized in that** the application of the intermediate layer (4) is carried out using a standard application roller (13), wherein the standard application roller (13) has a constant radius along an application extension.

5. The method according to any one of the preceding claims, **characterized in that** the intermediate layer (4) comprises a primer layer and/or that the embedding layer (5) comprises a corrosion protection layer.

6. The method according to any one of the preceding claims, **characterized in that** the functional structure (8) comprises a functional layer and the arrangement of the functional layer in the recess (6) is carried out by applying it on the metal substrate (3) using a recess application roller (12), wherein the recess application roller (12) has a greater radius in the embedding portion (7) of its axial extension than in the coating portion (10a, 10b) of its axial extension for arranging the functional structure (8) in the recess.

7. The method according to Claim 6, **characterized in that**, before arranging the functional structure (8), an application of a first adhesive layer in the recess (6) is carried out, wherein the application of the first adhesive layer is carried out using an recess application roller (12), wherein the recess application roller (12) has a greater radius in the embedding portion (7) of its axial extension than in the coating portion (10a, 10b) of its axial extension for arranging the functional structure (8) in the recess.

8. The method according to any one of the preceding claims, **characterized in that**, after arranging the functional structure, an application of a barrier layer is carried out using a standard application roller (13), wherein the standard application roller (13) has a constant radius along its extension.

9. The method according to Claim 8, **characterized in that**, before applying the barrier layer, an application of a second adhesive layer in the coating portion (10a, 10b) is carried out, wherein the application of the second adhesive layer is carried out using an application device designed as a coating application roller (9), wherein the coating application roller (9) has a greater radius in the sheathing portion (10a, 10b) of its axial extension than in the embedding portion (7) of its axial initial extension for causing the creation of recess upon application.

10. The method according to Claim 8 or according to Claim 9, **characterized in that** the barrier layer is transparent, in particular, comprising a transmission coefficient for incidental light falling perpendicularly at a wavelength of 600 nm, which is greater than 0.8, preferably greater than 0.9 - being particularly preferred, greater than 0.95.

11. The method according to any one of Claims 8 to 10, **characterized in that**, after application of the barrier layer (14), a rolling profiling of the layer composite (1) is carried out.

12. The method according to any one of the preceding claims, **characterized in that** the metal substrate (3) is a steel substrate, in particular, a steel strip or a flat steel.

13. The method according to any one of the preceding claims, **characterized in that** the functional structure (8) is designed as a plastic-containing film, and/or a photovoltaic element, in particular, an organic photovoltaic functional film; an LED; an OLED or a thin-film display, has a flat sensor and/or a thin-film battery.

## Revendications

1. Procédé, destiné à fabriquer un composite de couches (1) doté d'une structure fonctionnelle (8) enrobée, lors duquel l'on fabrique un composite de couches (1) en plusieurs couches, que l'on superpose dans la direction verticale, la fabrication de la structure en couches comprenant les étapes suivantes consistant à :
- mettre à disposition un substrat métallique (3),
- placer une couche d'enrobage (5), la couche d'enrobage (5) mettant à disposition dans la direction verticale un évidement (6), l'évidement (6) s'étendant le long d'un segment d'enrobage (7) d'une extension transversale du substrat métallique,
- placer une structure fonctionnelle (8) ou plusieurs structures fonctionnelles (8) respectivement dans une zone englobée par l'évidement (6), la couche d'enrobage (5) étant appliquée à l'aide d'un dispositif applicateur (9) qui applique la couche d'enrobage (5) le long d'au moins un segment d'enveloppe (10a, 10b) de l'extension transversale du substrat métallique, suite à quoi, au moins une arête (11a, 11b) du segment d'enveloppe (10a, 10b) délimite l'évidement (6), **caractérisé en ce que** le placement de la couche d'enrobage par application sur le substrat métallique (3) s'effectue à l'aide d'un dispositif applicateur conçu sous la forme d'un rouleau applicateur d'enveloppe (9), dans le segment dédié à l'enveloppe (10a, 10b), le rouleau applicateur d'enveloppe (9) présentant dans son extension axiale un rayon supérieur à celui du segment dédié à l'enrobage (7) de son extension axiale, pour l'obtention d'un évidement, en concomitance avec l'application.

2. Procédé selon la revendication 1, **caractérisé en ce que** l'on place au moins par segments une couche intermédiaire (4) sur le substrat métallique (3).

3. Procédé selon la revendication 2, **caractérisé en ce que** le placement de la couche intermédiaire (4) s'effectue par application de la couche intermédiaire (4) sur une épaisseur constante le long de l'extension transversale du substrat métallique.

4. Procédé selon la revendication 2 ou selon la revendication 3, **caractérisé en ce que** l'application de la couche intermédiaire (4) s'effectue à l'aide d'un rouleau applicateur standard (13), le rouleau applicateur standard (13) présentant un rayon constant le long d'une extension d'application.

5. Procédé selon l'une quelconque des revendications précédentes, **caractérisé en ce que** la couche intermédiaire (4) comporte une couche d'apprêt et/ou **en ce que** la couche d'enrobage (5) comporte une couche anticorrosion.

6. Procédé selon l'une quelconque des revendications précédentes, **caractérisé en ce que** la structure fonctionnelle (8) comporte une couche fonctionnelle et **en ce que** le placement de la couche fonctionnelle dans l'évidement (6) s'effectue par application sur le substrat métallique (3) en utilisant un rouleau applicateur d'évidement (12), dans le segment dédié à l'enrobage (7) de son extension axiale, le rouleau applicateur d'évidement (12) présentant un rayon supérieur à celui du segment dédié à l'enveloppe (10a, 10b) de son extension axiale, pour le placement de la structure fonctionnelle (8) dans l'évidement.

7. Procédé selon la revendication 6, **caractérisé en ce qu'**avant le placement de la structure fonctionnelle (8), il s'effectue une application d'une première couche d'agent adhésif dans l'évidement (6), l'application de la première couche d'agent adhésif s'effectuant en utilisant un rouleau applicateur d'évidement (12), dans le segment dédié à l'enrobage (7) de son extension axiale, le rouleau applicateur d'évidement (12) présentant un rayon supérieur à celui du segment dédié à l'enveloppe (10a, 10b) de son extension axiale, pour le placement de la structure fonctionnelle (8) dans l'évidement.

8. Procédé selon l'une quelconque des revendications précédentes, **caractérisé en ce qu'**après le placement de la couche fonctionnelle, il s'effectue une application d'une couche barrière à l'aide d'un rouleau applicateur standard (13), le rouleau applicateur standard (13) présentant un rayon constant le long de son extension.

9. Procédé selon la revendication 8, **caractérisé en ce qu'**avant l'application de la couche barrière, il s'effectue une application d'une deuxième couche d'agent adhésif dans le segment d'enveloppe (10a, 10b), l'application de la deuxième couche d'agent adhésif s'effectuant en utilisant un dispositif applicateur conçu sous la forme d'un rouleau applicateur d'enveloppe (9), dans le segment dédié à l'enveloppe (10a, 10b) de son extension axiale, le rouleau applicateur d'enveloppe (9) présentant un rayon supérieur à celui du segment dédié à l'enrobage (7) de son extension axiale, pour l'obtention d'un évidement, en concomitance avec l'application.

10. Procédé selon la revendication 8 ou selon la revendication 9, **caractérisé en ce que** la couche barrière est transparente, fait preuve notamment d'un coefficient de transmission pour de la lumière incidente à la perpendiculaire d'une longueur d'onde de 600 nm, qui est supérieur à 0,8, de préférence supérieur à 0,9, de manière particulièrement préférentielle, supérieur à 0,95.

11. Procédé selon l'une quelconque des revendications 8 à 10, **caractérisé en ce qu'**après l'application de la couche barrière (14), l'on procède à un profilage au rouleau du composite de couches (1).

12. Procédé selon l'une quelconque des revendications précédentes, **caractérisé en ce que** le substrat métallique (3) est un substrat en acier, notamment une bande d'acier ou un acier plat.

13. Procédé selon l'une quelconque des revendications précédentes, **caractérisé en ce que** la structure fonctionnelle (8) est conçue sous la forme d'un film comportant une matière plastique et/ou d'un élément photovoltaïque, notamment d'un film fonctionnel photovoltaïque organique ; d'une LED ; d'une OLED ; d'un afficheur en couche mince ; d'un capteur plan et/ou d'une batterie en couche mince.
